(19) **Europäisches Patentamt / European Patent Office / Office européen des brevets**

(11) **EP 3 694 170 B1**

(12) **EUROPEAN PATENT SPECIFICATION**

(45) Date of publication and mention
of the grant of the patent:
**30.08.2023 Bulletin 2023/35**

(21) Application number: **18877968.0**

(22) Date of filing: **15.10.2018**

(51) International Patent Classification (IPC):
**G06F 21/55** $^{(2013.01)}$   **G06F 21/53** $^{(2013.01)}$
**H04L 9/40** $^{(2022.01)}$

(52) Cooperative Patent Classification (CPC):
**H04L 63/1458; G06F 21/53; G06F 21/554;**
**H04L 63/1425**

(86) International application number:
**PCT/CN2018/110296**

(87) International publication number:
**WO 2019/095911 (23.05.2019 Gazette 2019/21)**

(54) **METHOD AND DEVICE FOR WITHSTANDING DENIAL-OF-SERVICE ATTACK**

VERFAHREN UND VORRICHTUNG ZUR ABWEHR VON DENIAL-OF-SERVICE-ANGRIFFEN

PROCÉDÉ ET DISPOSITIF PERMETTANT DE RÉSISTER À UNE ATTAQUE PAR DÉNI DE SERVICE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.11.2017 CN 201711124979**

(43) Date of publication of application:
**12.08.2020 Bulletin 2020/33**

(73) Proprietor: **Huawei Technologies Co., Ltd.**
**Longgang District**
**Shenzhen, Guangdong 518129 (CN)**

(72) Inventors:
• **XIE, Miao**
**Shenzhen**
**Guangdong 518129 (CN)**

• **YAO, Yingliang**
**Shenzhen**
**Guangdong 518129 (CN)**

(74) Representative: **Thun, Clemens**
**Mitscherlich PartmbB**
**Patent- und Rechtsanwälte**
**Karlstraße 7**
**80333 München (DE)**

(56) References cited:
WO-A1-2016/049319   WO-A1-2017/167166
CN-A- 105 809 036   CN-A- 105 978 917
CN-A- 106 796 639   US-A1- 2016 241 576
US-A1- 2017 277 869   US-A1- 2017 317 990

EP 3 694 170 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**TECHNICAL FIELD**

This application relates to the security field, and more specifically, to a method and device for defending against denial of service (DoS) attacks.

**BACKGROUND**

In recent years, smart terminal devices proliferate as the mobile internet develops. To provide smart mobile terminals with rich functions and extensibility, a terminal device is usually built in a rich execution environment (REE) that provides an open operating environment. The REE is also referred to as a general running environment, and mainly includes a rich operating system (Rich OS), for example, an Android® operating system or an iOS® operating system, that runs on a general purpose processor and a client application (CA) that runs on the Rich OS. A main advantage of the REE is that a user may add an application whenever necessary. However, such an open environment is susceptible to information leakage and malware propagation, exposing a terminal device to increasing attacks in various forms. Consequently, the terminal device tends to be cracked by malware, leaving the terminal device acutely vulnerable to all sorts of security issues.

It is a consensus in the industry that an REE is untrustworthy. In view of this, the Open Mobile Terminal Platform (OMTP) first proposed the concept of a trusted execution environment (TEE). In July 2010, the GlobalPlatform® (GP) proposed the TEE standard. A TEE is an independent running environment that runs outside an REE and is isolated from the REE. Each trusted application (TA) running in the TEE is independent, and the TA cannot access a secure resource of another TA without authorization. A CA in the REE cannot directly access a secure hardware resource and a secure software resource in the TEE, and therefore the TEE can defend against software attacks that occur on a side of the REE. When the TEE's identity authentication of the CA in the REE succeeds, the CA can invoke a specific application programming interface (API) to invoke a resource or service, for example, a cryptographic operation and storage, in the TEE or an access to data of the TA running in the TEE.

A TEE is an attempt to use hardware isolation to provide protection against attacks on a side of the REE to ensure the security of sensitive data. However, a TEE is still essentially a common security "platform". It is clearly specified in the GP standard that a TA and a CA are applications in a TEE, and the entire TEE needs to provide indispensable services for the TA and CA. Many software developers utilize TEEs to enhance security, and develop and deploy respective CAs and TAs by utilizing the TEEs and specific interfaces of the TEEs to support the security of the respective applications. Therefore, TEEs gradually become an important cornerstone of protecting application security and data security on a side of the REE, and somewhat determine a security level of a terminal device. However, a TEE has highly limited software and hardware resources. When a CA has a vulnerability or a side of the REE is rooted, a malicious application may easily use an existing interface to frequently invoke services on a side of the TEE. In this case, once all resources of the TEE are occupied and not released for a long time, a denial of service (DoS) attack may occur. As a result, for example, services on the side of the REE and the side of the TEE become unavailable, or even a device is restarted. It can be learned that, at present, terminal devices (on the side of the REE and the side of the TEE) are highly prone to DoS attacks, leading to severe threats to the security of the terminal devices.

WO 2017/167166 A1 discloses a control method for a multimedia system to eliminate a malicious access initiated by a malicious application attempting to access a trusted application in a secure operating system without switching systems, preventing a trusted application becoming inaccessible as a result of the malicious access.

WO 2016/049319 A1 discloses a distributed system that includes one or more enterprise event sources, such as endpoint(s). The system also includes a Big Data Analytics server, and optionally a Security Information and Event Management server. The Big Data Analytics server processes data collected from the enterprise event sources and produces behavioral profile models for each endpoint. The profiles, models, and ontology analysis are provided to the endpoints. Endpoint analytics use the output from the analytics servers to detect deviations from the endpoint's behavioral profile.

**SUMMARY**

This application provides a method for defending against denial of service (DoS) attacks, and a device configured to implement the method, to lower a probability of DoS inside the device and ensure that the device runs securely.

The invention is defined in the independent claims. Additional features of the invention are provided in the dependent claims.

According to a first aspect, an embodiment of this application provides a method according to claim 1.

By means of the method provided in this embodiment of this application, a control policy is determined by using the access behavior model, and the defense module specifically controls the access request according to the control policy, thereby precisely identifying and blocking an access request that poses a potential DoS attack threat and making the device more secure. Because the access behavior dataset used for training the access behavior feature model is collected in the TEE, behavior data may be rendered tamper-proof, thereby ensuring authenticity of a data sample and accuracy of the access behavior model. In addition, the defense module is also deployed in the TEE to ensure that the defense module is secure.

Before the access request is transferred to the defense module, identity authentication is performed in the TEE on the CA that initiates the access request. If the identity authentication of the CA fails, the access request is blocked. If the identity authentication of the CA succeeds, the access request is transferred to the defense module for further control. In this way, preliminary authentication may be performed on an access request in advance, to reduce the load of the defense module and prevent the defense module from becoming a performance bottleneck.

The access behavior dataset is collected by an access behavior data collector deployed in the TEE, to ensure reliable access behavior data and prevent the access behavior data from being tampered with by a malicious program on a side of the REE.

access behavior data collector records a plurality of access behavior logs corresponding to a plurality of access requests initiated by the at least one CA to the service/interface; and constructs the access behavior dataset based on the plurality of access behavior logs.

When the identity authentication of the CA succeeds, the access request is transferred to the access behavior data collector; and the access behavior data collector records an access behavior log corresponding to the access request, and incrementally updates the access behavior dataset. An access behavior model trained based on the updated access behavior dataset becomes increasingly precise, to iteratively optimize the control policy.

control policy includes a threshold of at least one control parameter, the at least one control parameter is determined based on the access behavior model, the threshold of the at least one control parameter is solved by using a formula for analyzing a capability of defending against DoS attacks on a premise that a minimum quantity of resources required to complete a DoS attack exceeds a rigid indicator, the formula for analyzing a capability of defending against DoS attacks represents a constraint relationship between the minimum quantity of resources required to complete a DoS attack and the control parameter, and the rigid indicator is correlated to a hardware resource restriction, an operating system restriction or a service scenario restriction of the terminal device. When the minimum quantity of resources required to complete a DoS attack exceeds the rigid indicator, it indicates that a probability of a DoS attack is 0. Therefore, based on the threshold of the control parameter that is solved by using the formula for analyzing a capability of defending against DoS attacks, the probability of a DoS attack can be minimized. Compared with a solution of using only the access behavior model to control the access request, the control parameter is more precise, and the probability of a DoS attack on a to-be-protected service/interface in the terminal device can be minimized.

In a possible implementation, the determining, by the defense module according to a control policy, whether to grant the access request includes: if the access request triggers the at least one control parameter to exceed the threshold, blocking the access request, or if the access request does not trigger the at least one control parameter to exceed the threshold, granting the access request. This threshold-based control manner has a relatively low computational overhead, and therefore has little impact on system performance.

In a possible implementation, after blocking the access request, the defense module instructs a user to determine whether to grant the access request; and if the user grants the access request, the access behavior model is updated by using a reinforcement learning algorithm based on the access behavior log corresponding to the access request, to obtain an updated access behavior model. By means of the technical solution, upon an erroneous determination of the defense module, the access behavior model may be corrected in time, to improve the precision of the access behavior model. Further, the control policy may be updated based on the updated access behavior model, to dynamically adjust the control policy, thereby controlling the access request more precisely.

In a possible implementation, the access behavior logs collected by the access behavior data collector include: information about an entity that initiates each of the plurality of access requests, timestamps of each of the plurality of access requests, and quantities of resources used for each of the plurality of access requests; and the at least one control parameter includes at least one of the following: a time interval between two consecutive accesses by one CA to the service/interface, a quantity of related resources of the service/interface that are held by one CA, and a time that one CA holds the related resources of the service/interface. During collection of the access behavior data collector, critical information for determining a DoS attack behavior is specifically collected, a small amount of data is collected, and fewer resources are consumed on a side of the TEE.

In a possible implementation, a trusted application TA runs in the TEE, the access request is used to request to open, in the TA, a session with the CA, and the at least one control parameter includes at least one of the following: the time interval between two consecutive accesses by one CA to the service/interface, a quantity of sessions held by one CA between the CA and the TA, and a time of the sessions held by one CA between the CA and the TA.

In a possible implementation, the threshold of the at least one control parameter includes a threshold of the time interval between two consecutive accesses by one CA to the service/interface; and the determining, by the defense module according to a control policy, whether to grant the access request includes: calculating a time interval between the access request initiated by the CA and an access request initiated by the CA to the service/interface a previous time; and when the calculated time interval is less than the threshold of the time interval, blocking, by the defense module, the access request; or when the calculated time interval is greater than the threshold of the time interval, granting, by the defense module, the access request.

In a possible implementation, the threshold of the at least one control parameter includes an upper limit of the quantity of sessions held by one CA between the CA and the TA; and the determining, by the defense module according to a control policy, whether to grant the access request includes: determining, based on a current request status of the CA, the quantity of sessions already held by the CA between the CA and the TA; and when the determined quantity of sessions is greater than or equal to the upper limit, blocking, by the defense module, the access request; or when the determined quantity of sessions is less than the upper limit, granting, by the defense module, the access request.

According to another aspect of the invention, an embodiment of this application provides a terminal device, including a memory, a processor, and a computer program stored in the memory, where when executing the computer program, the processor implements steps of the method according to the first aspect.

According to another aspect of the invention, an embodiment of this application provides a computer readable storage medium storing a computer program (instruction), where when the program (instruction) is executed by a processor, steps of the method according to the first aspect are implemented.

According to the foregoing technical solutions in this application, a probability of a DoS attack inside a device can be reduced, thereby ensuring that the device runs securely.

## BRIEF DESCRIPTION OF DRAWINGS

To describe the technical solutions in the embodiments of this application more clearly, the following briefly describes the accompanying drawings required for describing the embodiments.

FIG. 1 is a schematic diagram of a terminal device according to an embodiment of this application;

FIG. 2 is a schematic diagram of a terminal device according to an embodiment of this application;

FIG. 3 is a schematic diagram of a process of a method for defending against denial of service (DoS) attacks according to an embodiment of this application;

FIG. 4 is a flowchart of a method for defending against DoS attacks according to an embodiment of this application;

FIG. 5 is a schematic diagram of interaction between a client application and a trusted application according to an embodiment of this application;

FIG. 6 is a schematic diagram of a process of a method for defending against DoS attacks according to an embodiment of this application;

FIG. 7 is a schematic diagram of collecting access behavior data according to an embodiment of this application;

FIG. 8 is a schematic diagram of a process of training an access behavior model according to an embodiment of this application;

FIG. 9 is a schematic diagram of a process of generating a control policy according to an embodiment of this application;

FIG. 10 is a schematic diagram of a terminal device according to an embodiment of this application;

FIG. 11 is a schematic diagram of a terminal device according to an embodiment of this application; and

FIG. 12 is a schematic diagram of a server according to a non-claimed embodiment of this application.

## DESCRIPTION OF EMBODIMENTS

The following describes the technical solutions in the embodiments of this application in detail with reference to the accompanying drawings in the embodiments of this application.

An embodiment of this application provides a method for defending against denial of service (DoS) attacks, to identify and prevent a DoS attack initiated by a malicious program by invoking a specific interface or service in a device, thereby making the device more secure. The method provided in this application may typically be applied to a terminal device or may be applied to a computer system such as a server. The terminal device in the embodiments and claims of this application is a device, for example, a wireless terminal or a wired terminal, that provides voice and/or data connectivity to a user. The wireless terminal may communicate with one or more core networks through a radio access network (RAN). The wireless terminal may be a mobile terminal such as a mobile phone (or referred to as a "cellular" phone) or a computer with a mobile terminal, for example, may be a portable, pocket-sized, handheld, computer built-in, or vehicle-mounted mobile apparatus. The interface, also referred to as an application programming interface (API), is encapsulation and abstract expression, implemented by computer program code, of specific functions, and an application may implement the specific functions by invoking the interface. The service is an application component that can be executed in the background without providing a user interface, and the service may be enabled by another application or application component.

The following further describes the terminal device in this application in detail with reference to the accompanying drawings. It should be noted that the postpositive terms "unit" and "module" are merely for convenience of description, and these postpositive terms do not have differentiated meanings or functions.

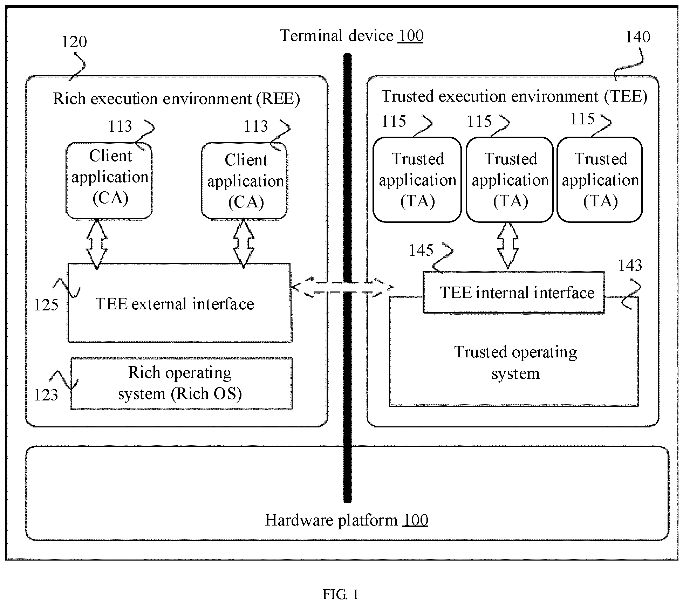

FIG. 1 is an architectural diagram of a terminal device 100 according to an embodiment of this application. Referring to FIG. 1, the terminal device 100 includes a hardware platform 110 and two running environments, namely, a rich execution environment (REE) 120 and a trusted execution environment (TEE) 140, that are isolated from each other on the hardware platform 110. Each of the two running environments has an independent hardware resource and an operating system. A hardware isolation technology, for example, an ARM® TrustZone mechanism may be used to isolate the hardware resource of the REE 120 from the hardware resource of the TEE 140. Moreover, a virtualization technology may be used to isolate the operating system of the REE 120 from the operating system of the TEE 140 and isolate an application in the REE 120 from an application in the TEE 140. In this way, hardware and software resources that are accessible to the TEE 140 are separate from those to the REE. In addition, the TEE 140 imposes highly strict restrictions on data and functions accessible to the application, to make a security level of the TEE 140 meet a specific security requirement. Therefore, the TEE 140 is usually considered a safe execution environment. The REE 120 is a running environment outside the TEE 140. Compared with the TEE 140, the REE 120 is an attack-prone environment with a lower security level, and the application running in the REE 120 is considered untrustworthy. An application 155 running in the TEE 140 is a trusted application (TA), and the TA 155 may provide a security-related function or service to a client application (CA) outside the TEE 140 or another TA in the TEE 140. A CA running in the REE 120 may request a security service provided by the TA 155 in the TEE 140 by using a TEE external interface 125. A trusted operating system (Trusted OS) 143 running in the TEE 140 provides a TEE internal interface 145 to the TA 155. The TA 155 obtains an access right to a secure resource and service by using the TEE internal interface 145. The secure resource and service include, but are not limited to, key entry and management, encryption, secure storage, a secure clock, a trusted user interface (UI), a trusted keyboard, and the like. A rich operating system (Rich OS) 123 in the REE 120 provides a wider range of features than the trusted OS 143 in the TEE 140. The rich OS 123 is highly open and can accept various types of applications, but the rich OS 123 is less secure than the trusted OS 143. The rich OS 123 may be an operating system, for example, Android® or iOS®, of a terminal.

For definitions of terms such as REE, TEE, CA, TA, rich OS, and trusted OS in all embodiments of this application, refer to TEE-related standards proposed by the Global Platform® (GP).

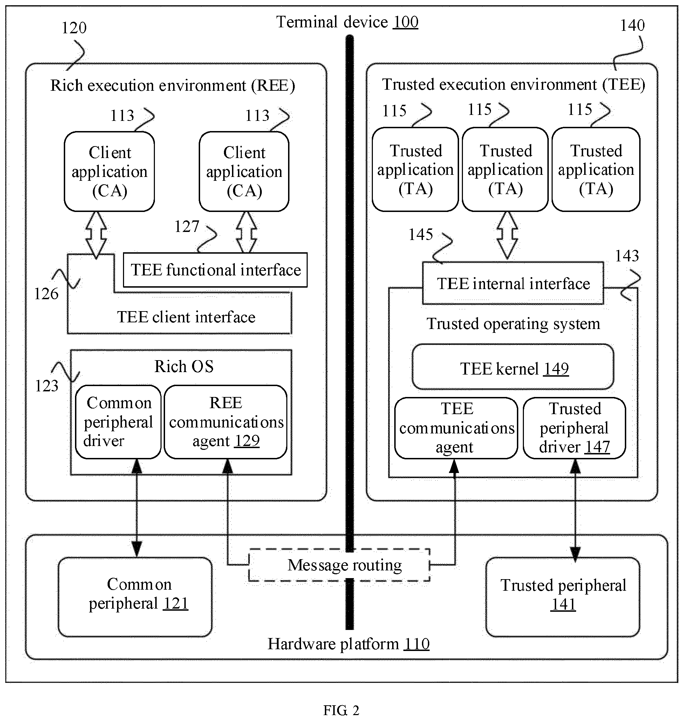

In an embodiment, as shown in FIG. 2, the hardware platform 110 of the terminal device 100 includes a common peripheral 121 and a trusted peripheral 141, and the rich OS 123 and the trusted operating system 143 respectively include a common peripheral driver 128 and a trusted peripheral driver 147. The trusted peripheral 141 includes a secure element (SE), for example, a secure storage, a secure clock, and a trusted keyboard, that can only be controlled and accessed by the TEE 140. The common peripheral 121 is a device that can be controlled and accessed by the rich OS 123 in the REE 120. The TEE external interface 125 in FIG. 1 may specifically include a TEE functional interface (TEE functional API) 127 and a TEE client interface (TEE client API) 126. The TEE functional interface 127 provides a set of application programming interfaces (API) to a CA 113 in the REE 120. The CA 113 can invoke some TEE services, such as encryption and decryption operations or secure storage, by using the TEE functional interface 127. The TEE client interface 126 is a low-level communications interface designed to enable the CA 113 running in the rich OS 123 to access data in and exchange data with a trusted application 115 running in the TEE 140. An REE communications agent 129 and a TEE communications agent 146 are respectively deployed in the REE 120 and the TEE 140, to support message exchange between the CA 113 and the TA 115. The REE communications agent 129 and the TEE communications agent 145 work together and secure, by using an underlying message routing mechanism, the message exchange between the CA 113 and the TA 115.

Based on the terminal device 100 described in FIG. 1 or FIG. 2, an embodiment of this application provides a method for defending against DoS attacks in the terminal device 100. A DoS attack that occurs in the terminal device 100 usually has the following features:

(1) A DoS attack initiator is an application, for example, a CA or another application on a side of the REE, that directly runs in the terminal device.
(2) The DoS attack initiator frequently invokes an interface or a service to occupy resources.
(3) The DoS attack initiator occupies obtained limited system resources for a long time.

Due to limited running resources of the terminal device 100, a limited quantity of applications can be deployed and run on the terminal device 100. This feature is the most essential difference for differentiation from a traditional network DoS attack. In view of this, the "defending against DoS attacks in the terminal device" in this embodiment of this application includes: (1) For a to-be-protected service or interface, for example, a TA OpenSession (OpenSession) interface, on the side of the REE 120 and/or the side of the TEE 140, enable successful access to all predefined normal CAs (for example, a CA set), and no denial of service problem occurs. (2) Block/interrupt an invocation of the to-be-protected service or interface by a malicious CA, where the "to-be-protected service or interface" herein is a target object for the method in this embodiment of this application. The to-be-protected interface may be the TEE internal interface 145 or may be the TEE external interface 125, for example, the TEE functional interface 127 and/or the TEE client interface 126. The to-be-protected service may be a service on the side of the TEE and/or the side of the REE. It should be understood that, in addition to the terminal device, the method for defending against DoS attacks provided in this embodiment of this application may also be applied to a computer system of another type, for example, a server or a data center having a dual-domain (a security domain and a non-security domain) system.

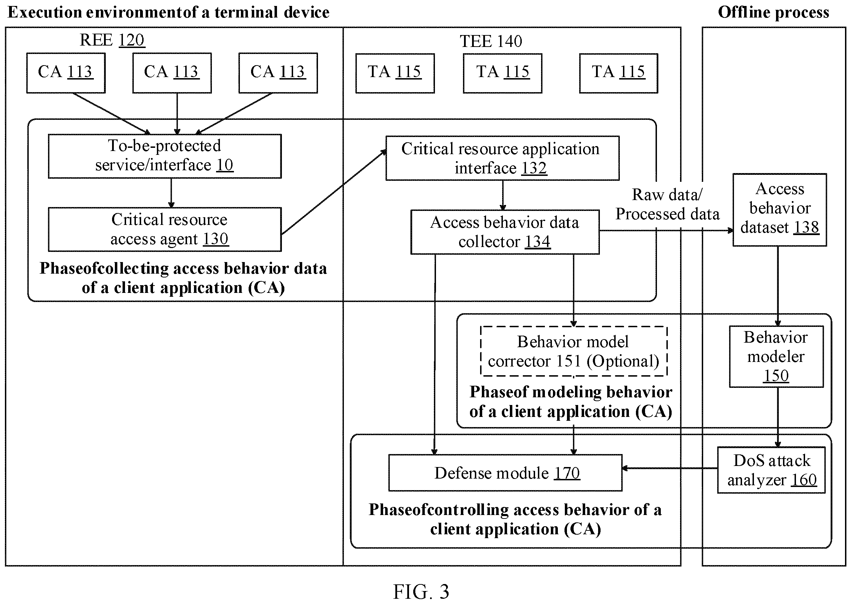

FIG. 3 shows functional entities and main steps in the method for defending against denial of service attacks provided in this embodiment of this application. As shown in FIG. 3, the method for defending against denial of service attacks in this embodiment of this application includes three phases: (1) a phase (referred to as a "data collection phase" below) of collecting access behavior data of a client application (CA); (2) a phase (referred to as a "model training phase" below) of training a CA behavior model; and (3) a phase (referred to as a "control phase" below) of controlling an access behavior of a CA. The data collection phase and the model training phase are usually performed offline. To be specific, sample data collection and model training are performed during system software development and deployment before an operating system of the terminal device is released. It should be understood that, in a specific implementation of the solution, the three phases are not necessarily performed in sequence.

In the data collection phase, an access behavior data sample of accessing a to-be-protected service/interface 10 by the CA needs to be collected as an input of the model training phase, and it should be ensured that the collected access behavior data sample is trustworthy and can reflect features of an access behavior of accessing the to-be-protected service/interface 10 by the CA in an actual service scenario. Therefore, in this embodiment of this application, an access behavior data collector 134 is deployed in the TEE 140 to ensure the security of collecting access behavior data and prevent access behavior data from being tampered with by a malicious program on the side of the REE 120. The access behavior data collector 134 collects an access behavior log when one or more normal CAs access the to-be-protected service/interface 10 to construct an access behavior dataset 138. A malicious CA is likely to initiate a DoS attack, whereas the "normal CA" herein is not. Usually, the normal CA is a reliable CA that is predefined by a user or an application developer or a reliable CA whose security check succeeds. The to-be-protected service/interface 10 may be a service or an interface of the REE or the TEE. If the to-be-protected service/interface 10 is deployed in the REE 120, the to-be-protected service/interface 10 forwards, to a critical resource access agent 130 in the REE 120, an access request initiated by the CAto the to-be-protected service/interface. The critical resource access agent 130 is an agent program and is responsible for forwarding the access request from the to-be-protected service/interface to a critical resource application interface 132 deployed in the TEE 140. The critical resource application interface 132 is responsible for performing identity authentication on an entity that initiates the received access request. After the identity authentication of the entity succeeds, the critical resource application interface 132 forwards the access request to the access behavior data collector 134 deployed in the TEE 140. The access behavior data collector 134 records an access behavior log corresponding to the access request. If the to-be-protected service/interface 10 is deployed in the TEE 140, the to-be-protected service/interface 10 may directly send the access request of the CA to the critical resource application interface 132 on the side of the TEE without a need of forwarding by the critical resource access agent 130.

In the model training phase, a behavior modeler 150 uses the access behavior dataset 138 as a data source and uses a statistical method and/or machine learning method, for example, a maximum-likelihood estimation method, to train an access behavior model required by a DoS attack analyzer 160. The access behavior model can represent a feature, for example, a time interval between two consecutive accesses to the to-be-protected service/interface 10 or a quantity of related critical resources of the to-be-protected service/interface 10 that are held during an access, of an access behavior of a normal CA accessing the to-be-protected service/interface 10. Model training includes model construction and optimization of model parameters. An access behavior model or model parameters obtained after training are stored for use in the control phase. A process of training the access behavior model based on the access behavior dataset 138 may be implemented by using a plurality of existing technologies, and details are not described herein.

In the control phase, the DoS attack analyzer 160 uses the access behavior model output by the behavior modeler 150 as an input to solve, by using a formula, built in the DoS attack analyzer 160, for analyzing a capability of defending against DoS attacks, a control parameter required by a defense module 170, to obtain a control policy. The control policy is used to represent a constraint that the control parameter needs to meet, and includes a threshold or value range of at least one control parameter. The control policy may be converted into determining logic to be executed by the defense module 170. When receiving an access request initiated to the to-be-protected service/interface, the critical resource application interface 132 first performs identity authentication on an entity that initiates the access request. If the identity authentication of the entity fails, the access request may be directly blocked. If identity authentication of the entity succeeds, the critical resource application interface 132 sends the access request to the access behavior data collector 134, the access behavior data collector 134 forwards the access request to the defense module 170, and the defense module 170 determines, according to the control policy, to grant or block the access request. The critical resource application interface 132 and the defense module 170 may block the access request in a plurality of manners. For example, a command, message or parameter may be returned to the to-be-protected service/interface 10 to instruct the to-be-protected service/interface 10 to reject the access request. Alternatively, a system function or an interface may be invoked to reject the access request. In a possible implementation, after the identity authentication of the entity succeeds, the critical resource application interface 132 may directly send the access request to the defense module 170 without a need of forwarding by the access behavior data collector 134. The defense module 170 is deployed in the TEE 140. A security mechanism of the TEE 140 is used to keep the security and confidentiality of the defense module 170 and the control policy intact. The defense module 170 relies on a small quantity of control parameters to control the access request to the to-be-protected interface, to reduce a probability that a denial of service attack occurs in the terminal device, thereby ensuring that a terminal system runs securely.

The following describes detailed implementations of the foregoing three phases separately by way of examples.

In the data collection phase, the access behavior data collector 134 does not need to collect full access behavior data of the normal CA, and may specifically collect some access behavior data as required for control, to reduce overheads of system resources. For example, the access behavior data collector 134 may determine, based on a root cause of a DoS attack that occurs in the terminal device 100, a type of an access behavior log that needs to be collected, in the data collection phase, record, in the system, some access behavior logs of accessing the to-be-protected service/interface 10 by a plurality of normal CAs, and eventually output the access behavior dataset 138 required in an offline process. The type of the access behavior log that needs to be collected includes a log that records a critical behavioral feature when the CA accesses the to-be-protected service/interface. The critical behavioral feature herein is a behavioral feature that can be used to distinguish a normal CA from a CA that is likely to initiate a DoS attack. In an embodiment, the access behavior log collected by the access behavior data collector 134 includes features in a time dimension and a resource dimension in a process of accessing the to-be-protected service/interface 10 by the CA. Specifically, the features in the time dimension include, but are not limited to, one or more of the following: timestamps of accessing the service/interface by the CA, a time interval between two consecutive accesses by one CA to the service/interface, and a time (a time difference between requesting a critical resource by the CA and releasing the resource by the CA) that the CA holds the related resources of the service/interface. The features in the time dimension include, but are not limited to, one or more of the following: a quantity of related resources of the service/interface that are held by one CA during an access. The related resources of the service/interface include a system resource occupied to implement functions of the service/interface or a system resource that can be obtained by the application by accessing or invoking the service/interface, and is, for example, a session, a CPU or a memory. Correspondingly, the access behavior data collector 134 records access behavior logs of the CAs in a process of accessing or invoking the to-be-protected service/interface 10 by the plurality of normal CA, and eventually outputs the access behavior dataset 138.

In an embodiment, the access behavior data collector 134 may store the collected raw data into the memory or may store data obtained after the collected raw data is cleaned or processed into the memory. Data cleaning is a process in which a computer reviews and verifies data to delete duplicate information, correct existing errors, and provide data consistency. Data processing is changing a type, a format or the like of data or performing mathematical transformation or the like on data.

The access behavior dataset 138 includes access behavior logs of each normal CA. In the model training phase, the behavior modeler 150 performs feature extraction on the access behavior dataset 138, converts an extracted feature into a feature vector that can be processed by a machine learning algorithm, and then trains an access behavior model by using the machine learning algorithm such as a softmax algorithm. The access behavior model represents a behavioral feature or rule of accessing an access request by the normal CA. The DoS attack analyzer 160 determines the control parameter based on the access behavior model, and calculates the constraint of the control parameter by using the formula for analyzing a capability of defending against DoS attacks, to generate the control policy. In an embodiment, to make the access behavior model more precise, before performing model training, the behavior modeler 150 may divide the collected access behavior dataset 138 into a plurality of categories in one or more dimensions, and respective access behavior models are trained for the plurality of categories. For example, the dataset may be divided in a dimension of the CA. To be specific, access behavior logs of each CA are classified into one category. Alternatively, the dataset may be divided in a dimension of a service scenario. To be specific, access behavior logs of all normal CAs in a same service scenario are classified into one category. Behavioral logs of invoking a same service/interface by a same CA may be different in different service scenarios. When behavior data is collected and model is constructed based on service scenarios, behavioral features of invocations by the CA in different scenarios can be reflected more accurately. Therefore, the access behavior dataset may be divided in a finer manner with reference to information in both the dimension of the CA and the dimension of the service scenario. It can be understood that, for ease of division of the dataset, the access behavior data collector 134 may add a necessary remark to an access behavior log of a CA in the data collection phase, for example, record an identifier and/or a service scenario of a CA corresponding to the access behavior log. In this way, machine learning is performed on the categories obtained after division, to obtain a plurality of access behavior models (or model parameters) that respectively correspond to the plurality of categories.

The DoS attack analyzer 160 determines, based on the access behavior model (or model parameter) trained and output by the behavior modeler 150, a control parameter required to defend against DoS attacks and an initial constraint of the control parameter. The constraint may be a specific value or value range. The control parameter may indicate some features of an access behavior, for example, features in a time dimension or a resource dimension of accessing the to-be-protected service/interface by the CA. In an embodiment, the control parameter may include a time interval between accesses to the to-be-protected service/interface, a quantity of resources occupied or held during an access to the to-be-protected service/interface, a time of holding or occupying the resource, and the like. Usually, if a control parameter corresponding to a CA that initiates an access to the to-be-protected service/interface meets the initial constraint of the control parameter, the CA is considered to be a normal CA, that is, the CA is unlikely to initiate a DoS attack. If a control parameter corresponding to a CA that initiates an access to the to-be-protected service/interface does not meet the initial constraint of the control parameter, the CA is considered to be a malicious CA that is likely to initiate a DoS attack. However, it may be not accurate to directly determine the likelihood of a DoS attack by using the initial constraint of the control parameter. In other words, even if the control parameter corresponding to the CA meets the initial constraint of the control parameter, it still cannot be ensured that a probability of a DoS attack is minimal. Therefore, the DoS attack analyzer 160 may optimize the constraint of the control parameter by using the formula for analyzing a capability of defending against DoS attacks, to minimize a probability of a DoS attack. The formula for analyzing a capability of defending against DoS attacks is used to indicate a constraint relationship between a minimum quantity of resources required to complete a DoS attack and the control parameter. The minimum quantity of resources required to complete a DoS attack may be a quantity of malicious programs that need to run simultaneously on the terminal device or a size of shared memory that needs to be occupied. Because software and hardware resources of the terminal device are limited, if the minimum quantity of resources required to complete a DoS attack exceeds a rigid indicator correlated to a hardware resource restriction or a software (for example, an operating system) restriction of the terminal device, it indicates that a probability of a DoS attack is 0. To be specific, a probability of a DoS attack may be evaluated by using the formula for analyzing a capability of defending against DoS attacks. Different values of the control parameter correspond to different probabilities of a DoS attack. When a probability of a DoS attack is minimal (optimally 0), a value of the control parameter obtained after a solution is optimal. In view of this, the DoS attack analyzer 160 may solve the value of the control parameter by using the formula for analyzing a capability of defending against DoS attacks on the premise that the minimum quantity of resources required to complete a DoS attack exceeds the rigid indicator (that is, a probability of a DoS attack is 0). A solved value may be used as a constraint of an optimized control parameter. Further, the DoS attack analyzer 160 may generate a corresponding control policy based on the constraint of the optimized control parameter. The defense module 170 controls, according to the control policy, an access request initiated to the to-be-protected service/interface.

Specifically, in an embodiment, it is assumed that the control parameter is determined to be the following based on the access behavior model output by the behavior modeler 150 after training:

(1) a maximum holding time that a predefined normal CA holds a related resource of the to-be-protected service/interface, where the maximum holding time is denoted by b;
(2) a minimum time interval between two consecutive accesses by the predefined normal CA to the to-be-protected service/interface, where the minimum time interval is denoted by a; and
(3) an upper quantity limit of related resources of the to-be-protected service/interface that are held by one CA during an access, where the upper quantity limit is denoted by m.

The formula for analyzing a capability of defending against DoS attacks of the terminal device may be a formula for calculating a lower limit value of resources Y required to complete a DoS attack, and may be, for example:

$$Y = (a/b) * m,$$

where the required resource Y may be a quantity of malicious programs that need to run simultaneously on the terminal device, a size of shared memory that needs to be occupied or the like. When $Y \geq \gamma$, a DoS attack can be prevented, where $\gamma$ is a rigid indicator and is correlated to a hardware resource restriction, a software (for example, an operating system) restriction or a service scenario restriction of the terminal device. For example, $\gamma$ may be a maximum quantity of applications or processes that run simultaneously on the terminal device. Therefore, when Y denotes the quantity of malicious programs that need to run simultaneously to complete a DoS attack, a DoS attack can be prevented provided that $Y \geq \gamma$.

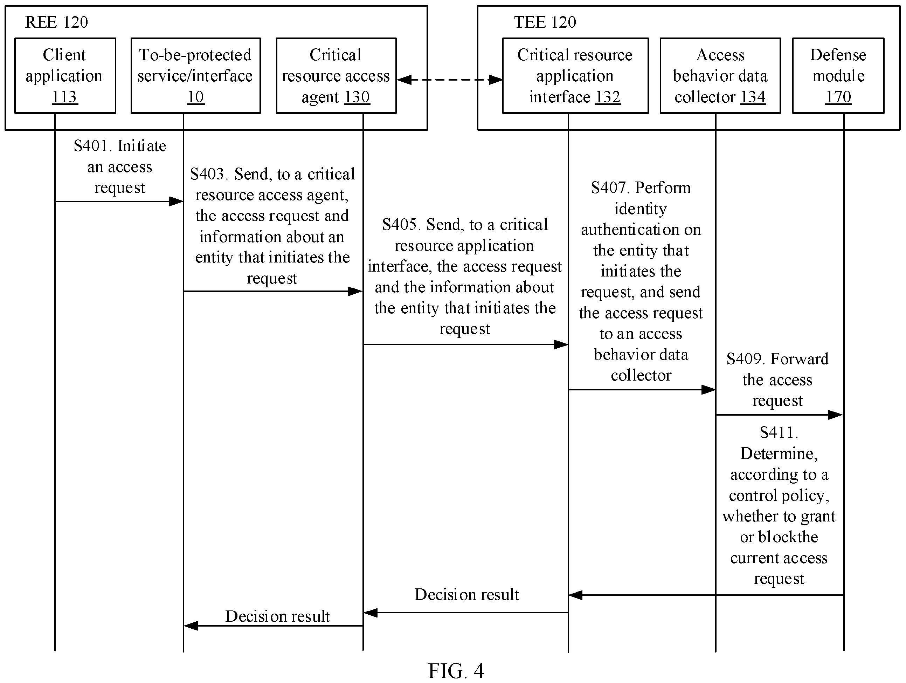

Therefore, an objective of solving the control parameter is to minimize, on a premise that $Y \geq \gamma$, values of a, b, and m are solved, a probability of a DoS attack that the malicious CA can cause. A solution is calculated for the control parameter based on the foregoing premise, and the constraint of the control parameter (after optimization), for example, a value range or a threshold of the control parameter may be obtained. The constraint of the control parameter may be converted into a control policy or determining logic, which may be fixed in the defense module 170, and the defense module 170 performs security control, according to the control policy, on the access request initiated to the to-be-protected service/interface. Specifically, as shown in FIG. 4, for example, a CA on the side of the REE initiates an access request to the to-be-protected service/interface 10 on the side of the REE or the side of the TEE. A method for controlling an access request by using the defense module 170 includes the following steps:

Step 401: The CA 113 on the side of the REE initiates an access request to the to-be-protected service/interface 10.

Step 403: The to-be-protected service/interface 10 encapsulates the access request, and transfers, to the critical resource access agent 130 on the side of the REE, the access request and information about an entity (that is, the CA 113 in step 401) that initiates the request.

Step 405: The critical resource access agent 130 transfers, to the critical resource application interface 132 on the side of the TEE by using a program interface deployed by the side of the TEE on the side of the REE, the access request and the information about the entity (that is, the CA 113) that initiates the request.

Step 407: The critical resource application interface 132 performs identity authentication on the entity that initiates the request, and sends the access request correspondingly to the access behavior data collector 134 when the identity authentication of the entity succeeds, where the access behavior data collector 134 stores an access behavior log corresponding to the access request.

Step 409: The access behavior data collector 134 transfers the access request and a current request status of the entity that initiates the request to the defense module 170 on the side of the TEE. Optionally, in this step, the access behavior data collector 134 further records an access behavior log corresponding to the access request, to update the access behavior dataset 138.

Step 411: The defense module 170 determines, according to the control policy, whether to grant the current access request. After the defense module 170 determines, according to the control policy, to grant or block the access request, a decision result is fed back to the to-be-protected service/interface 10 by using the critical resource application interface 132, and the to-be-protected service/interface 10 responds to the current access request or rejects the current access request based on the decision result.

It can be understood that when a TA on the side of the TEE initiates an access request to the to-be-protected service/interface 10 on the side of the REE or the side of the TEE, the to-be-protected service/interface 10 may directly send the access request to the access behavior data collector 134 without a need of forwarding by the critical resource access agent 130 and the critical resource application interface 132.

In an embodiment, assuming that the access request initiated by the CA 113 to the to-be-protected service/interface 10 is a request to open, in the TA 115, a session with the CA 113, the control policy includes a threshold of a time interval between two consecutive accesses by one CA to the service/interface, and/or an upper limit of a quantity of sessions held by one CA between the CA and the TA. The defense module 170 then calculates a time interval between the access request initiated by the CA 113 and an access request initiated by the CA 113 to the service/interface a previous time. When the calculated time interval is less than the threshold of the time interval, the defense module 170 blocks the access request. When the calculated time interval is greater than the threshold of the time interval, the defense module 170 grants the access request. Alternatively, if the quantity of sessions already held by the CA 113 between the CA 113 and the TA 115 is greater than or equal to the foregoing upper limit, the defense module 170 blocks the access request, or if the quantity of sessions already held by the CA 113 between the CA 113 and the TA 115 is less than the foregoing upper limit, the defense module 170 grants the access request.

Optionally, if relatively low security and relatively high usability are required, the method may further include: Step 413: After determining to block the current access request, the defense module 170 requests, through a user feedback mechanism, the user to determine whether a subject of the access request is trustworthy. If the subject of the access request is trustworthy, the current request is granted, a behavior model corrector 151 is used to record information about the request, and the access behavior model and the control policy are refreshed by using a method such as reinforcement learning. The access behavior model is trained offline based on the access behavior dataset 138, and the dataset is a sample of access behavior data of accessing the to-be-protected service/interface by the normal CA. Therefore, there may be a deviation from an actual access behavior. A function of the behavior model corrector 151 is to determine, by using behavior log data captured in real time, whether the access behavior model has a deviation from an actual access behavior. If there is a deviation, the access behavior model is updated by using an online learning method, and the DoS attack analyzer 160 further updates the control policy based on the updated access behavior model. Correspondingly, the defense module 170 controls a subsequent access request based on the updated control policy.

According to the foregoing solution in this embodiment of this application, the access behavior data collector is deployed on the side of the TEE to collect access behavior logs of accessing the to-be-protected service/interface 10 by a plurality of predefined normal CAs and output the access behavior dataset, thereby ensuring the trustworthiness of data collection of the access behavior logs. Further, probability distribution of a limited quantity of access behavior parameters of the normal CA or upper and lower limits of the access behavior parameters are learned based on the machine learning method to train an effective access behavior model, a precise control policy is determined based on the access behavior model, and the access request initiated to the to-be-protected service/interface is then controlled according to the control policy, to defend in time against DoS attacks initiated by using the to-be-protected service/interface, thereby improving the security of the terminal device.

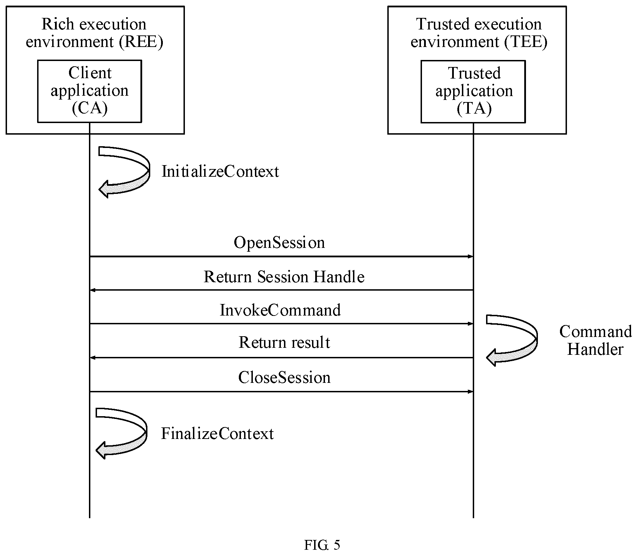

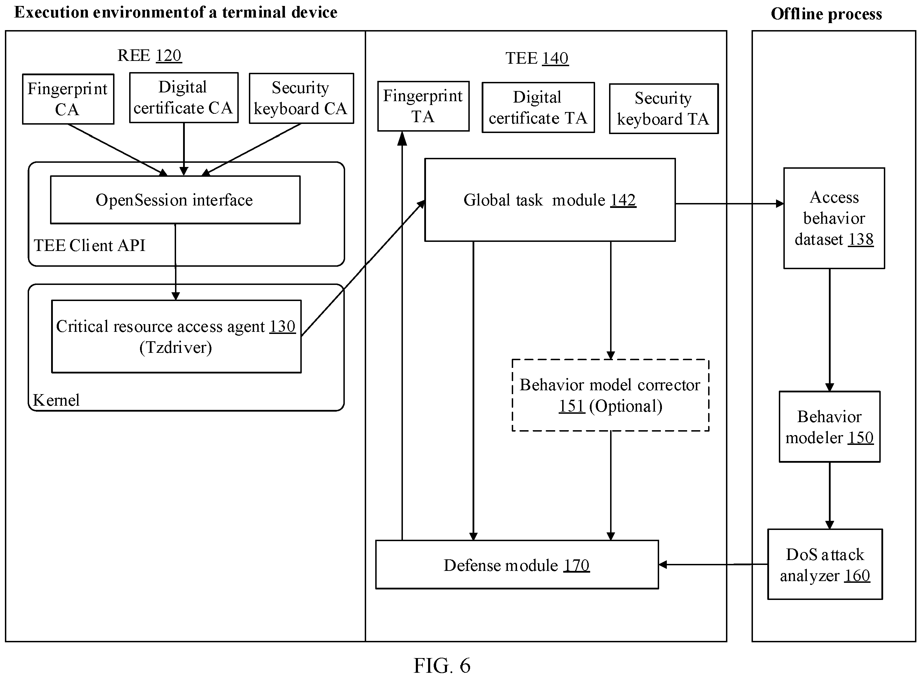

The following describes a more specific embodiment of the method for defending against DoS attacks in the terminal device 100 with reference to FIG. 5 and FIG. 6. It is assumed that the REE in the terminal device 100 is an Android® operating system, and the TEE is a trusted OS implemented based on a trustzone (Trustzone) hardware technology. Interaction and an interface between the REE and the TEE fully meet the TEE standard proposed by the Global Platform. FIG. 5 is a flowchart of interaction between a CA in the REE and a TA in the TEE in this embodiment. The interaction includes five main processes: InitializeContext, OpenSession, InvokeCommand, CloseSession, and FinalizeContext.

A CA invokes an OpenSession interface to enable a specified TA to open a session, with the CA, and an operation that the CA subsequently invokes a service of the TA takes place in a context specified by the session. Therefore, in the TEE, due to a computing resource restriction, the CA is not allowed to unrestrictedly open sessions of a TA. If the CA unrestrictedly opens sessions of a TA, a DoS attack may occur as a result. If an upper limit of a quantity of sessions that a CA can open simultaneously is specified in advance, a DoS attack cannot be prevented, and a successful access by a predefined normal CA cannot be ensured. An excessively small specified upper limit leads to a high vulnerability to DoS attacks and a failure to meet requirements of a normal CA. An excessively large specified upper limit may lead to high resource consumption and an excessive burden to system resources of the TEE, resulting in proneness to crashes and denial of service of the system. Therefore, a universal threshold is hardly practicable, and only an arbitrary threshold may be set without any success in defending against DoS attacks.

Most CAs that access the OpenSession interface are developed by third parties. In an embodiment, as shown in FIG. 6, for example, three of the CAs, namely, a fingerprint CA, a digital certificate CA, and a security keyboard CA, are used as predefined normal CAs. FIG. 6 shows a manner of deploying of critical components configured to implement a function of defending against DoS attacks in this embodiment of this application. A to-be-protected OpenSession interface is in a user-mode TEE client API library on the side of the REE. Any CA can invoke the OpenSession interface. The identity of a CA is authenticated based on an authentication model on the side of the TEE. However, because the side of the REE is a non-secure side, a malicious CA may fake identity information to bypass an identity authentication mechanism on the side of the TEE. The critical resource access agent 130 is responsible for packaging an OpenSession request initiated by the predefined normal CA into a secure monitor call (SMC) command and transferring the SMC command to a global task module 142 on the side of the TEE. In order to improve the security of data collection, the critical resource access agent 130 is a kernel-mode process or thread, and a function of the critical resource access agent 130 may be performed by a Tzdriver component in the kernel. The global task module is a core module for processing an access on the side of the TEE, and implements functions of the critical resource application interface 132 and the access behavior data collector 134 in the foregoing embodiment of this application. The global task module 142 includes an authentication model for a CA. After identity authentication of a CA succeeds, the authentication model records access behavior data of the CA to generate an access behavior log and stores the access behavior log into a persistent storage medium. During offline processing, namely, a system development phase, these access behavior logs are exported to obtain the access behavior dataset 138 for the OpenSession interface. By using the access behavior dataset as data samples, the behavior modeler 150 trains an access behavior model that can depict an access behavior of the predefined normal CA, and eventually the DoS attack analyzer 160 determines a control policy based on the access behavior model and fixes the control policy in the defense module 170. The defense module 170 performs security control, according to the control policy, on an access request initiated to the to-be-protected OpenSession interface.

After system development is completed, when a CA invokes the OpenSession interface, the critical resource access agent 130 sends a corresponding SMC request to the global task module 142. If identity authentication, performed by the global task module 142, of the CA succeeds, a current access status of the CA is sent to the defense module 170. If the defense module 170 determines, according to the control policy, to grant a current access request, a corresponding TA is invoked to perform an OpenSession operation and return a session handle to the CA. If the defense module 170 rejects the access, the defense module 170 instructs, in a form of a dialog box, a user to determine whether to grant the current access request. If the user grants the access, it indicates that the defense module 170 blocks the running of a normal CA, and therefore an erroneous determination occurs. The global task module 142 then records behavior data of the current access request and transfers the behavior data to the behavior model corrector 151. When a data volume in the behavior model corrector 151 reaches a specified threshold, for example, 100, a correction process is initiated to relearn the access behavior model and generate a new control policy, thereby reducing a system error rate.

The following further describes implementation details of collection of the access behavior dataset, training of the access behavior model, and calculation of the control policy.

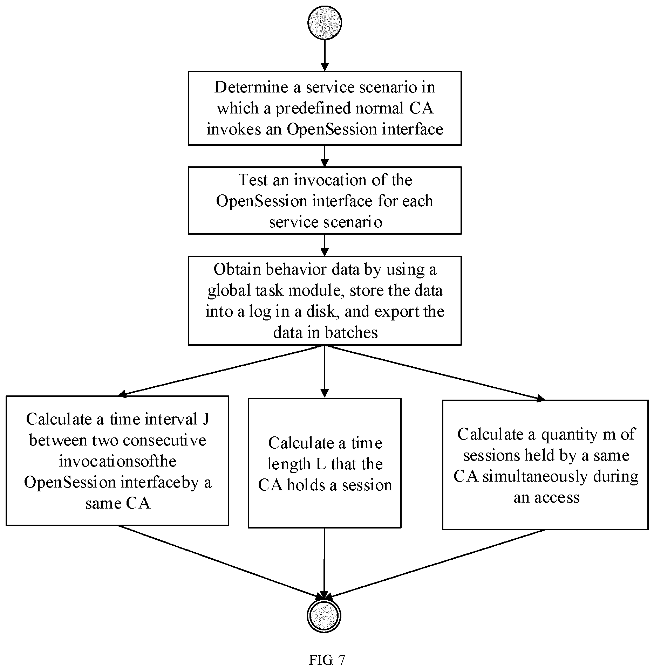

As shown in FIG. 7, one or more service scenarios in which a predefined normal CA invokes an OpenSession interface may be first determined. For each scenario, an invocation of or an access to the OpenSession interface by each normal CA is tested. During testing, the global task module 142 records access behavior data of each normal CA each time into a memory. For example, the global task module 142 may record and maintain timestamps of accessing the OpenSession interface by each CA, timestamps of accessing the CloseSession interface by the CA, a quantity of sessions already held by the CA when the CA requests a session each time or the like. At specific timing, recorded access behavior data may be exported in batches and used to calculate the following separately: (1) an access time interval J between two consecutive invocations of the OpenSession interface by a same CA; (2) a time length L that the CA holds a session, namely, a time length that related critical resources of the OpenSession interface are held; and (3) a quantity m of sessions held by a same CA simultaneously during an access. These parameters can depict behavioral features of accessing the OpenSession interface by each normal CA in specific service scenarios. Therefore, based on the calculated parameters, a minimum behavior log set of each normal CA in each service scenario may be constructed. The minimum behavior log sets eventually constitute the access behavior dataset.

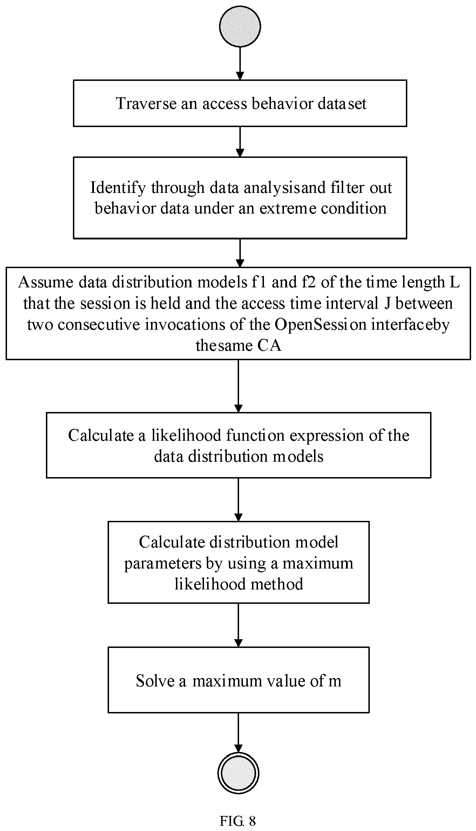

Further, as shown in FIG. 8, the behavior modeler 150 may traverse a set of access behavior logs recorded by the global task module 142 each time when each predefined normal CA (for example, the fingerprint CA, the digital certificate CA or the security keyboard CA) invokes the OpenSession interface. Abnormal behavior data that is generated in extreme cases is identified through data analysis and is filtered out, and then the access behavior model of each normal CA is trained by using a machine learning method. First, it is assumed that in the access behavior dataset, each data sample is distributed independently. Statistical distribution of data of a time length L that a CA holds a session and an access time interval J between two consecutive invocations of the OpenSession interface by the same CA meets the Gaussian distribution. In an embodiment, learning of the access behavior model may be modeled as (using the time length L that a session is held as an example) parameters u and σ used to solve a Gaussian distribution function, to maximize a probability of a sampling value of L in the access behavior dataset.

The probability of the sampling value of L in the access behavior dataset is calculated by using a model f1 of the parameters u and σ, which can be expressed as:

$$f(l1, l2, \cdots ln | u, \sigma) = f(l1|u, \sigma) * f(l2|u, \sigma) * \cdots * f(ln|u, \sigma) = \prod_{i=1}^{n} f(li|u, \sigma)$$

In other words, the parameters u and σ used are solved to maximize the probability of the sampling value of L, where f is a likelihood function.

In this embodiment, the distribution parameters of L and J are learned by using a maximum likelihood method, derivative calculation is performed on the likelihood function, and a derivative obtained after calculation is set to zero, to obtain an approximation estimation expression of the parameters:

$$\hat{\mu} = \bar{x} = \sum_{i=1}^{n} \frac{x_i}{n}.$$

$$\hat{\sigma}^2 = \frac{1}{n} \sum_{i=1}^{n} (x_i - \mu)^2.$$

For example, after statistical learning is performed on the access behavior dataset of the digital certificate CA, the access behavior models in each service scenario can be obtained. For example, in a payment service scenario, obtained models of L and J are:

$$u(L) = 100 \text{ ms}, \sigma(L) = 30 \text{ ms}, u(J) = 10s, \text{ and } \sigma(J) = 2s,$$

where a maximum value of m is 2.

Similarly, parameters of the access behavior models of each normal CA in each scenario can be obtained by using the foregoing algorithm.

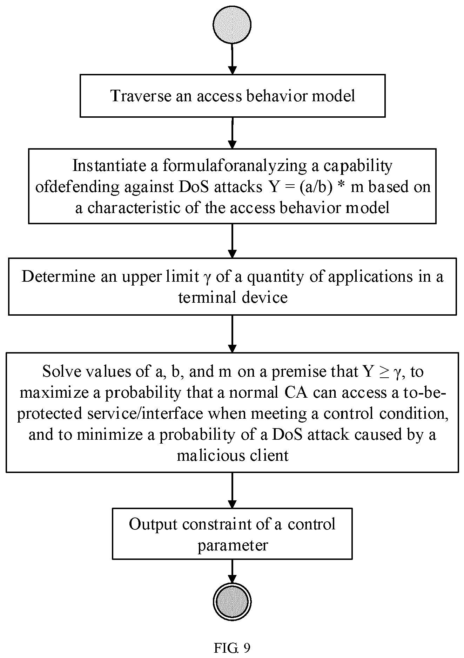

Further, as shown in FIG. 9, the DoS attack analyzer 160 determines one or more control parameters based on the access behavior model, and then solves, by using a built-in formula for analyzing a capability of defending against DoS attacks in the DoS attack analyzer 160, a threshold or value range of the control parameter on a premise that a probability of a DoS attack is minimal. For example, a digital certificate CA is applied to a payment service. It can be learned based on a service scenario that a quantity of CAs that can run in a terminal device is limited and is usually less than or equal to 100. Therefore, the rigid indicator $\gamma$ is set to 100. It is assumed that L and J meet the Gaussian distribution. According to Gaussian distribution characteristics, a probability that data is in a range between $\mu$-3$\sigma$ and $\mu$+3$\sigma$ (x = u) can be up to 99.730020%. Therefore, according to a model u(L) = 0.1s, a(L) = 0.03s, u(J) = 10s, and o(J) = 2s, a control parameter a can be calculated by using the following formula with a confidence level of 99.730020%: a = u(J) - 3$\sigma$(J), and a = 4 can be obtained. Similarly, b = u(L) + 3$\sigma$(L) = 0.19. In this case, when the minimum resource amount Y required to complete a DoS attack exceeds the rigid indicator $\gamma$, a probability of a DoS attack is minimal, that is, 0, where Y may be a quantity of malicious programs that need to run simultaneously. Therefore, according to Y = (a/b) * m $\geq$ $\gamma$, 21.06 * m $\geq$ 100, and m $\geq$ 4.76 $\approx$ 5 can be obtained.

In sum, the threshold of the control parameter may be obtained as follows:

a = 4, that is, a minimum time interval between two consecutive accesses to the OpenSession interface is 4s.
b = 0.19, that is, a maximum time that a session is held is 0.19s.
m = 5, that is, an upper limit of a maximum quantity of sessions that are held by the CA simultaneously is 5.

Finally, the threshold of the control parameter is converted into the control policy and is fixed in the defense module 170. For example, the threshold of the control parameter may be converted into the following control policy.

Calculate a time interval t between a current access request by the CA to the OpenSession interface and an access by the CA to the OpenSession interface a previous time.

If (t < 4), reject the current access request.

If (t $\geq$ 4), calculate a quantity s of sessions already held by a CA subject of the current access request. If (s > 5), reject the current access request, or if (s $\leq$ 5), grant the current access request.

Calculate all CAs that hold a session with the TA. If a CA holds a session for over 0.19s, forcibly release the session of the CA.

The foregoing control policy may be implemented in a form of code and the code is loaded into the defense module 170. The defense module 170 can execute the code to control the access request.

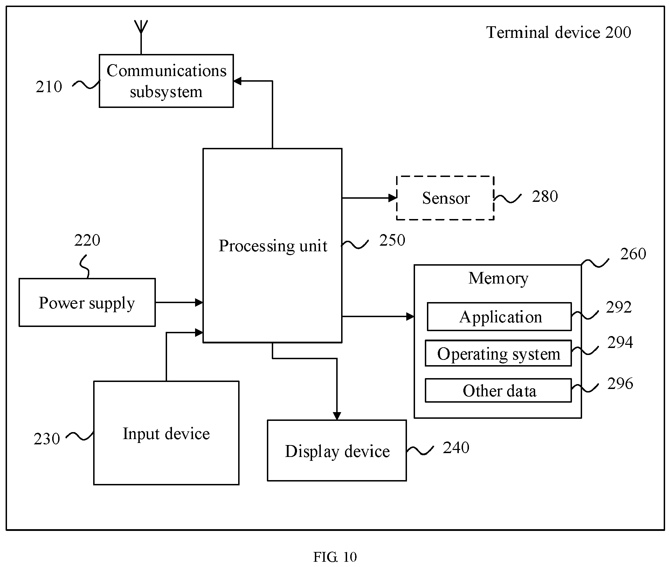

FIG. 10 shows an example of another terminal device 200 according to an embodiment of this application. As shown in FIG. 10, the terminal device 200 includes a communications subsystem 210, a power supply 220, an input device 230, a display device 240, a processing unit 250, and a memory 260. The memory 260 stores a computer program or an instruction, where the instruction includes an operating system 294, an application 292, and the like. The processing unit 250 is configured to execute the computer program stored in the memory 260 to implement a method defined by the computer program. For example, the processing unit 250 runs the operating system 294 to implement various functions of the operating system on the terminal device 200.

The processing unit 250 may include one or more processors. For example, the processing unit 250 may include an application processor, a graphics processing unit, a digital signal processor, and the like. When the processing unit 250 includes a plurality of processors, the plurality of processors may be integrated into a same chip or may be independent chips respectively.

The memory 260 further stores other data 296 in addition to the computer program. The other data 296 may include data, for example, system data (for example, a configuration parameter of the operating system 294) and user data, generated during running of the operating system 294 or application 292.

The memory 260 usually includes an internal memory and an external storage. The internal memory includes, but is not limited to, a random access memory (RAM), a read-only memory (ROM), a cache or the like. The external storage includes, but is not limited to, a flash memory, a hard disk, a universal serial bus (USB) disk, and the like. The computer program is usually stored in the external storage, and before being executed, the computer program may be loaded by the processing unit 250 from the external storage to the internal memory.

In an embodiment, the operating system 294 includes the computer program used for implementing the method for defending against DoS attacks provided in this embodiment of this application, so that after the processing unit 250 runs the operating system 294, steps of the method for defending against DoS attacks provided in this embodiment of this application are implemented. For example, the critical resource access agent 130, the critical resource application interface 132, the access behavior data collector 134, the behavior modeler 150, the DoS attack analyzer 160, and the defense module 170 described in the foregoing embodiments may be in a form of computer programs (instructions). After the computer programs (instructions) are loaded and run by the processing unit 250, respective functions of these modules are implemented.

The input device 230 is configured to: receive information, for example, digital/character information, a touch operation or a gesture, input by a user, and generate a corresponding input signal. Specifically, in an embodiment, the input device 230 includes a touch panel. The touch panel, also referred to as a touchscreen, can collect a touch operation of the user on the touch panel and generate a touch signal to drive a related component to respond to an operation of the user. In addition to the touch panel, the input device 230 may further include other input devices, including but not limited to, one or more of a physical keyboard, a functional key (such as a volume control key and a power switch key), a trackball, a mouse, a joystick, and the like.

The display device 240 may be a display panel such as a liquid crystal display (LCD) or an organic light-emitting diode (OLED). In some embodiments, the touch panel may cover the display device 240 to form a touch display screen.

The communications subsystem 210 is a basic communications unit of the terminal device 200, and is configured to send and receive data of the terminal device 200. The power supply 220 is configured to supply power to the foregoing components, and may be specifically a power management chip.

When the terminal device 200 is a wireless terminal, the communications subsystem 210 includes a wireless modem that mainly implements functions such as baseband processing, modulation and demodulation, signal amplification and filtering, and equalization. In an embodiment, the communications subsystem 210 includes a baseband processor, a radio frequency circuit, and an antenna. The radio frequency circuit and the antenna are mainly responsible for sending and receiving a signal. The baseband processor is responsible for processing such as A/D conversion, D/A conversion, and encoding and decoding of a signal. The baseband processor supports one or more wireless communications standards. The wireless communications standards herein include, but are not limited to, a global system for mobile communications (GSM), code division multiple access (CDMA), wideband code division multiple access (WCDMA), high speed packet access (HSPA), and long term evolution (LTE). The baseband processor may be a separate chip, or may be integrated into a chip with a processor included in the processing unit 250.

Optionally, the terminal device 200 further includes one or more sensors 280 such as an acceleration sensor and an optical sensor.

The method for defending against DoS attacks provided in this embodiment of this application may be performed by an appropriate combination of software, hardware, and/or firmware of the terminal device 200. For example, the method may be implemented by the operating system 294 shown in FIG. 10 in combination with necessary hardware.

In addition, a person skilled in the art can understand that the terminal device 200 may include fewer or more components than those shown in FIG. 10. In the terminal device 200 shown in FIG. 10, only components that are more pertinent to a plurality of implementations disclosed in this embodiment of this application are shown.

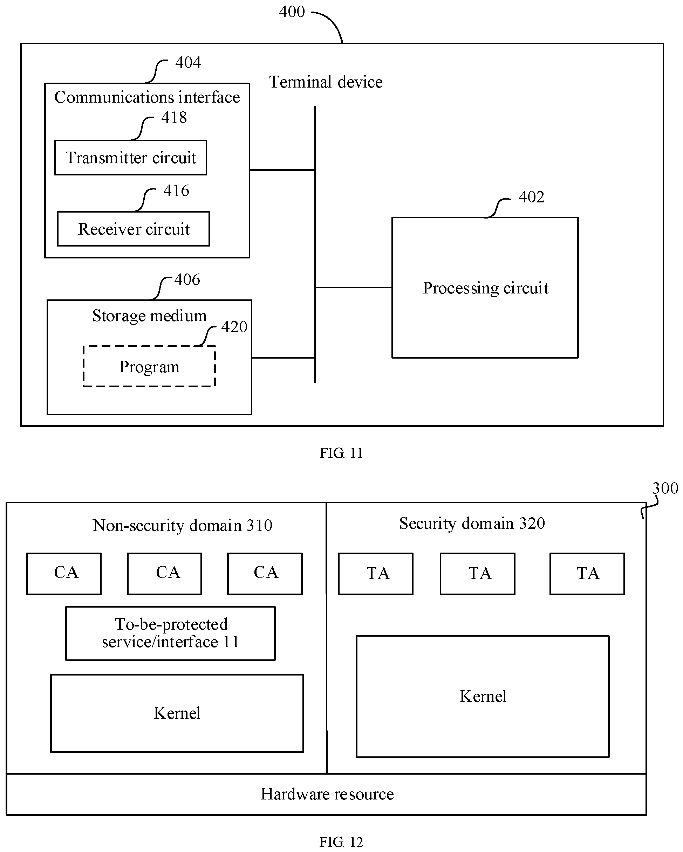

Based on the method for defending against DoS attacks described in the foregoing embodiment, an embodiment of this application further provides a terminal device 400. As shown in FIG. 11, the terminal device 400 includes a processing circuit 402, and a communications interface 404 and a storage medium 406 that are connected to the processing circuit 402.

The processing circuit 402 is configured to: process data, control data access and storage, issue a command, and control other components to perform operations. The processing circuit 402 may be implemented as one or more processors, one or more controllers, and/or another structure that can be used to execute a program. The processing circuit 402 may specifically include at least one of a general purpose processor, a digital signal processor (DSP), an application-specific integrated circuit (ASIC), a field programmable gate array (FPGA) or another programmable logic component. The general purpose processor may include a microprocessor, and any conventional processor, controller, microcontroller or state machine. The processing circuit 402 may also be implemented as a computing component, for example, a combination of a DSP and a microprocessor.

The storage medium 406 may include a non-transitory computer readable storage medium, for example, a magnetic storage device (for example, a hard disk, a floppy disk or a magnetic stripe), an optical storage medium (for example, a digital versatile disc (DVD)), a smart card, a flash memory device, a RAM, a ROM, a programmable read-only memory (PROM), an erasable programmable read-only memory (EPROM), a register or any combination thereof. The storage medium 406 may be coupled to the processing circuit 402, so that the processing circuit 402 can read information from and write information into the storage medium 406. Specifically, the storage medium 406 may be integrated into the processing circuit 402, or the storage medium 406 and the processing circuit 402 may be separate.

The communications interface 404 may include a circuit and/or a program, to implement two-way communication between the terminal device 400 and one or more network devices (for example, a router, a switch, and an access point). The communications interface 404 includes at least one receiver circuit 416 and/or at least one transmitter circuit 418. In an embodiment, the communications interface 404 may be implemented partially or completely by a wireless modem.

In an embodiment, the storage medium 406 stores a program (instruction) 420, and the processing circuit 402 is adapted to execute the program (instruction) 420 stored in the storage medium 406, to implement some or all of the steps in any method embodiment of this application.

An embodiment of this application further provides a computer readable storage medium, where the computer readable storage medium stores code, an instruction or a program for implementing the method steps in any method embodiment of this application.

It may be clearly understood by a person skilled in the art that, for convenient and brief description, for a specific working process of the foregoing apparatuses and units, refer to corresponding processes in the foregoing method embodiments, and details are not described herein again.

In a non-claimed embodiment shown in FIG. 12, the method for defending against DoS attacks provided in the embodiments of this application may also be applied to a server 300 having a dual-domain system, where the server 300 includes a non-security domain 310 and a security domain 320 that are isolated from each other, and a security level of the security domain 320 is higher than that of the non-security domain 310. Similar to the TEE and REE described in the foregoing embodiments, a CA running in the non-security domain 310 may also request, by using a specific interface, a service of a TA running in the security domain 320. A malicious application may implement a DoS attack by frequently invoking a to-be-protected service/an interface 11 in the non-security domain 310 or the security domain 320. Therefore, the method for defending against DoS attacks provided in the foregoing embodiments of this application may be used to protect the service/interface 11. Specifically, an access behavior data collector is deployed in the security domain 320 to collect access behavior logs of accessing the to-be-protected service/interface 11 by a plurality of predefined normal CAs running in the non-security domain 310 and then construct an access behavior dataset. Further, one or more access behavior models are trained based on a machine learning method, a precise control policy is determined based on the access behavior model, and a defense module deployed in the security domain 320 then controls, according to the control policy, an access request initiated to the to-be-protected service/interface 11, to defend in time against DoS attacks initiated by using the to-be-protected service/interface 11, thereby making the device more secure. For specific implementation details of data collection, model training, and access control, refer to the foregoing method embodiments, and details are not described herein again.

In the several embodiments provided in this application, it should be understood that the disclosed apparatuses and methods may be implemented in another manner. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form or another form.

In addition, functional units in the embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or a part of the technical solutions may be implemented in a form of a computer software product. The computer software product is stored in a storage medium and includes several instructions for instructing a computer device (which may be a personal computer, a server, or a network device) to perform all or some of the steps of the methods described in the embodiments of this application. The foregoing storage medium includes any medium, for example, a USB flash drive, a removable hard disk, a ROM, a RAM or an optical disc, that can store program code.

**Claims**

1. A method for defending against denial of service, DoS, attacks in a terminal device, wherein the terminal device comprises a trusted execution environment, TEE (140), and a rich execution environment, REE (120), and at least one client application, CA (113), runs in the REE (120), and the method comprises the steps of:

   • recording, by an access behavior data collector (134) deployed in the TEE (140), a plurality of access behavior logs corresponding to a plurality of access requests initiated by the at least one CA to a service or an interface, wherein the service or the interface is provided in the REE (120) or in the TEE (140), wherein the at least one CA (113) initiates the plurality of access requests to the service or the interface to request a service or a resource,
   • constructing, by the access behavior data collector (134), an access behavior dataset (138) based on the plurality of access behavior logs, the access behavior dataset comprising the plurality of access behavior logs,
   • training an access behavior model based on the access behavior dataset (138) as a data source of the training and based on a statistical method or a machine learning algorithm, wherein the access behavior model represents a behavioral feature of accessing the service or the interface by the at least one CA (113),
   • determining a value of each control parameter among at least one control parameter based on the trained access behavior model, wherein a control policy comprises a threshold of the at least one control parameter,
• determining the threshold of the at least one control parameter by using a formula used for analyzing a capability of defending against DoS attacks in a constraint according to which a minimum quantity of resources required to complete a DoS attack exceeds a rigid indicator, the formula for analyzing the capability of defending against DoS attacks represents a constraint relationship between the minimum quantity of resources required to complete the DoS attack and the values of the at least one control parameter, and the rigid indicator is correlated to a hardware resource restriction, an operating system restriction or a service scenario restriction of the terminal device,

　　○ wherein the minimum quantity of resources required to complete the DoS attack is a quantity of applications that need to run simultaneously on the terminal device, and the rigid indicator is a maximum quantity of applications that are allowed to run simultaneously on the terminal device,

• converting the determined threshold of the at least one control parameter into the control policy, thereby determining the control policy,
• after determining the control policy, receiving an access request initiated by a CA (113) among the at least one CA to the service or the interface,
• if an identity authentication of the CA (113) succeeds, transferring the access request to the access behavior data collector (134) deployed in the TEE,
• recording, by the access behavior data collector (134), an access behavior log corresponding to the access request,
• forwarding, by the access behavior data collector (134), the access request to a defense module (170) deployed in the TEE (140); and
• determining, by the defense module (170) according to the control policy, whether to grant the access request.

2. The method according to claim 1, wherein the determining, by the defense module (170) according to the control policy, whether to grant the access request comprises:

• if the access request triggers the at least one control parameter to exceed the threshold, blocking the access request, or if the access request does not trigger the at least one control parameter to exceed the threshold, granting the access request.

3. The method according to claim 2, further comprising:

• after blocking the access request, instructing a user to determine whether to grant the access request; and
• if the user grants the access request, updating the access behavior model based on the access behavior log corresponding to the access request, to obtain an updated access behavior model.

4. The method according to claim 3, further comprising:

• updating the control policy based on the updated access behavior model.

5. The method according to any of the preceding claims, wherein the plurality of access behavior logs corresponding to the plurality of access requests comprise: information about an entity that initiates each of the plurality of access requests, timestamps of each of the plurality of access requests, and quantities of resources used for each of the plurality of access requests; and the kind of the at least one control parameter comprises at least one of the following: a time interval between two consecutive accesses by one CA to the service or the interface, a quantity of related resources of the service or the interface that are held by one CA, and a time that one CA holds the related resources of the service or the interface.

6. The method according to claim 1, wherein a trusted application, TA (115), runs in the TEE (140), the access request is used to request to open, in the TA (115), a session with the CA (113), and the kind of the at least one control parameter comprises at least one of the following: the time interval between two consecutive accesses by one CA (113) to the service or the interface, a quantity of sessions held by one CA between the CA and the TA, and a time of the sessions held by one CA between the CA and the TA.

7. The method according to claim 6, wherein the threshold of the at least one control parameter comprises a threshold of the time interval between two consecutive accesses by one CA to the service or the interface; and the determining, by the defense module (170) according to the control policy, whether to grant the access request comprises:

- calculating a time interval between the access request initiated by the CA and an access request initiated by the CA to the service or the interface a previous time; and
- when the calculated time interval is less than the threshold of the time interval, blocking, by the defense module (170), the access request; or
- when the calculated time interval is greater than the threshold of the time interval, granting, by the defense module (170), the access request.

8.  The method according to claim 6, wherein the threshold of the at least one control parameter comprises an upper limit of the quantity of sessions held by one CA between the CA and the TA; and the determining, by the defense module (170) according to the control policy, whether to grant the access request comprises:

- determining, based on a current request status of the CA, the quantity of sessions already held by the CA between the CA and the TA; and
- when the determined quantity of sessions is greater than or equal to the upper limit, blocking, by the defense module (170), the access request; or
- when the determined quantity of sessions is less than the upper limit, granting, by the defense module (170), the access request.

9.  A terminal device comprising a processor, a memory, and a computer program that is stored in the memory and can be executed by the processor, wherein, when the processor executes the program, the terminal device is caused to perform any of the methods according to claims 1 - 8.

10. A computer readable storage medium storing a computer program, wherein when the program is executed by a processor on a terminal device, the terminal device is caused to perform any of the methods according to claims 1 - 8.


**Patentansprüche**

1.  Verfahren zur Abwehr von "Denial-of-Service"-,DoS-,Angriffen in einer Endgerätevorrichtung, wobei die Endgerätevorrichtung eine vertrauenswürdige Ausführungsumgebung, TEE, (140) und eine "Rich Execution Environment", REE, (120) umfasst und mindestens eine Client-Anwendung, CA, (113) in der REE (120) ausgeführt wird, und das Verfahren die folgenden Schritte umfasst:

- Aufzeichnen einer Mehrzahl von Zugriffsverhaltensprotokollen, die einer Mehrzahl von Zugriffsanforderungen entspricht, die von mindestens einer CA für einen Dienst oder eine Schnittstelle initiiert wurde, durch einen in der TEE (140) bereitgestellten Zugriffsverhaltensdatensammler (134), wobei der Dienst oder die Schnittstelle in der REE (120) oder in der TEE (140) vorgesehen ist, wobei die mindestens eine CA (113) die Mehrzahl von Zugriffsanforderungen für den Dienst oder die Schnittstelle zum Anfordern eines Diensts oder einer Ressource initiiert,
- Erstellen eines Zugriffsverhaltensdatensatzes (138) durch den Zugriffsverhaltensdatensammler (134) basierend auf der Mehrzahl von Zugriffsverhaltensprotokollen, wobei der Zugriffsverhaltensdatensatz die Mehrzahl von Zugriffsverhaltensprotokollen umfasst,
- Trainieren eines Zugriffsverhaltensmodells basierend auf dem Zugriffsverhaltensdatensatz (138) als Datenquelle des Trainings und basierend auf einem statistischen Verfahren oder einem Algorithmus für maschinelles Lernen, wobei das Zugriffsverhaltensmodell ein Verhaltensmerkmal des Zugreifens auf den Dienst oder die Schnittstelle durch die mindestens eine CA (113) darstellt,
- Bestimmen eines Wertes jedes Steuerparameters unter mindestens einem Steuerparameter basierend auf dem trainierten Zugriffsverhaltensmodell, wobei eine Steuerrichtlinie eine Schwelle des mindestens einen Steuerparameters umfasst,
- Bestimmen der Schwelle des mindestens einen Steuerparameters durch Verwenden einer Formel, die zum Analysieren einer Fähigkeit zum Abwehren von DoS-Angriffen bei einer Beschränkung verwendet wird, gemäß der eine minimale Menge von Ressourcen, die zum Durchführen eines DoS-Angriffs erforderlich ist, einen starren Indikator überschreitet, wobei die Formel zum Analysieren der Fähigkeit zum Abwehren von DoS-Angriffen eine Beschränkungsbeziehung zwischen der minimalen Menge von Ressourcen, die zum Durchführen des DoS-Angriffs erforderlich ist, und den Werten des mindestens einen Steuerparameters darstellt und der starre Indikator mit einer Hardwareressourceneinschränkung, einer Betriebssystemeinschränkung oder einer Dienstszenarioeinschränkung der Endgerätevorrichtung korreliert ist,

    o wobei die minimale Menge von Ressourcen, die zum Durchführen des DoS-Angriffs erforderlich ist, eine Menge von Anwendungen ist, die auf der Endgerätevorrichtung simultan ausgeführt werden muss, und der starre Indikator eine maximale Menge von Anwendungen ist, die auf der Endgerätevorrichtung simultan ausgeführt werden darf,

• Umwandeln der bestimmten Schwelle des mindestens einen Steuerparameters in die Steuerrichtlinie, um dadurch die Steuerrichtlinie zu bestimmen,
• Empfangen einer Zugriffsanforderung, die von einer CA (113) unter der mindestens einen CA für den Dienst oder die Schnittstelle initiiert wird, nach dem Bestimmen der Steuerrichtlinie,
• Übertragen der Zugriffsanforderung an den in der TEE bereitgestellten Zugriffsverhaltensdatensammler (134), wenn eine Identitätsauthentifizierung der CA (113) erfolgreich ist,
• Aufzeichnen eines Zugriffsverhaltensprotokolls, das der Zugriffsanforderung entspricht, durch den Zugriffsverhaltensdatensammler (134),
• Weiterleiten der Zugriffsanforderung durch den Zugriffsverhaltensdatensammler (134) an ein in der TEE (140) bereitgestelltes Abwehrmodul (170); und
• Bestimmen durch das Abwehrmodul (170), ob die Zugriffsanforderung bewilligt werden soll, gemäß der Steuerrichtlinie.

2. Verfahren nach Anspruch 1, wobei das Bestimmen durch das Abwehrmodul (170) gemäß der Steuerrichtlinie, ob die Zugriffsanforderung bewilligt werden soll, umfasst:

• Blockieren der Zugriffsanforderung, wenn die Zugriffsanforderung den mindestens einen Steuerparameter für das Überschreiten der Schwelle auslöst, oder Bewilligen der Zugriffsanforderung, wenn die Zugriffsanforderung den mindestens einen Steuerparameter für das Überschreiten der Schwelle nicht auslöst.

3. Verfahren nach Anspruch 2, ferner umfassend:

• Anweisen eines Benutzers zum Bestimmen, ob die Zugriffsanforderung bewilligt werden soll, nach dem Blockieren der Zugriffsanforderung, und
• Aktualisieren des Zugriffsverhaltensmodells basierend auf dem Zugriffsverhaltensprotokoll, das der Zugriffsanforderung entspricht, um ein aktualisiertes Zugriffsverhaltensmodell zu erhalten, bei Bewilligung der Zugriffsanforderung durch den Benutzer.

4. Verfahren nach Anspruch 3, ferner umfassend:

• Aktualisieren der Steuerrichtlinie basierend auf dem aktualisierten Zugriffsverhaltensmodell.

5. Verfahren nach einem der vorhergehenden Ansprüche, wobei die Mehrzahl von Zugriffsverhaltensprotokollen, die der Mehrzahl von Zugriffsanforderungen entspricht, umfasst: Informationen über eine Entität, die jede der Mehrzahl von Zugriffsanforderungen initiiert, Zeitstempel jeder der Mehrzahl von Zugriffsanforderungen und Mengen von Ressourcen, die für jede der Mehrzahl von Zugriffsanforderungen verwendet werden; und wobei die Art des mindestens einen Steuerparameters mindestens eines von Folgendem umfasst: ein Zeitintervall zwischen zwei aufeinanderfolgenden Zugriffen durch eine CA auf den Dienst oder die Schnittstelle, eine Menge von zugehörigen Ressourcen des Dienstes oder der Schnittstellen, die von einer CA gehalten wird, und eine Zeit, die eine CA die zugehörigen Ressourcen des Dienstes oder der Schnittstelle hält.

6. Verfahren nach Anspruch 1, wobei eine vertrauenswürdige Anwendung, TA, (115) in der TEE (140) ausgeführt wird, wobei die Zugriffsanforderung zum Anfordern des Öffnens einer Sitzung mit der CA (113) in der TA (115) verwendet wird, und die Art des mindestens einen Steuerparameters mindestens eines von Folgendem umfasst: das Zeitintervall zwischen zwei aufeinanderfolgenden Zugriffen durch eine CA (113) auf den Dienst oder die Schnittstelle, eine Menge von Sitzungen, die von einer CA zwischen der CA und der TA gehalten wird, und eine Zeit der Sitzungen, die von einer CA zwischen der CA und der TA gehalten werden.

7. Verfahren nach Anspruch 6, wobei die Schwelle des mindestens einen Steuerparameters eine Schwelle des Zeitintervalls zwischen zwei aufeinanderfolgenden Zugriffen durch eine CA auf den Dienst oder die Schnittstelle umfasst; und das Bestimmen durch das Abwehrmodul (170) gemäß der Richtlinie, ob die Zugriffsanforderung bewilligt werden soll, umfasst:

• Berechnen eines Zeitintervalls zwischen der von der CA initiierten Zugriffsanforderung und einer von der CA zu einem früheren Zeitpunkt für den Dienst oder die Schnittstelle initiierten Zugriffsanforderung, und
• Blockieren der Zugriffsanforderung durch das Abwehrmodul (170), wenn das berechnete Zeitintervall unter einer Schwelle des Zeitintervalls liegt; oder
• Bewilligen der Zugriffsanforderung durch das Abwehrmodul (170), wenn das berechnete Zeitintervall über der Schwelle des Zeitintervalls liegt.

8. Verfahren nach Anspruch 6, wobei die Schwelle des mindestens einen Steuerparameters eine Obergrenze der Menge von Sitzungen umfasst, die von einer CA zwischen der CA und der TA gehalten wird; und das Bestimmen durch das Abwehrmodul (170) gemäß der Steuerrichtlinie, ob die Zugriffsanforderung bewilligt werden soll, umfasst:

• Bestimmen der Menge von Sitzungen, die von der CA zwischen der CA und der TA bereits gehalten wurde, basierend auf einem aktuellen Anforderungsstatus der CA; und
• Blockieren der Zugriffsanforderung durch das Abwehrmodul (170), wenn die bestimmte Menge von Sitzungen größer oder gleich der Obergrenze ist; oder
• Bewilligen der Zugriffsanforderung durch das Abwehrmodul (170), wenn die bestimmte Menge von Sitzungen kleiner oder gleich der Obergrenze ist.

9. Endgerätevorrichtung, umfassend einen Prozessor, einen Speicher und ein Computerprogramm, das im Speicher gespeichert ist und vom Prozessor ausgeführt werden kann, wobei die Endgerätevorrichtung bei Ausführung des Programms durch den Prozessor zum Durchführen eines der Verfahren nach Anspruch 1 bis 8 veranlasst wird.

10. Computerlesbares Speichermedium, das ein Computerprogramm speichert, wobei eine Endgerätevorrichtung bei Ausführung des Programms durch einen Prozessor auf der Endgerätevorrichtung zum Durchführen eines der Verfahren nach Anspruch 1 bis 8 veranlasst wird.

**Revendications**

1. Procédé de défense contre des attaques par déni de service, DoS, dans un dispositif terminal, le dispositif terminal comprenant un environnement d'exécution de confiance, TEE (140), et un environnement d'exécution riche, REE (120), et au moins une application client, CA (113), s'exécutant dans le REE (120), et le procédé comprenant les étapes consistant à :

• enregistrer, par un collecteur de données de comportement d'accès (134) déployé dans le TEE (140), une pluralité de journaux de comportement d'accès correspondant à une pluralité de demandes d'accès initiées par l'au moins une CA à un service ou à une interface, dans lequel le service ou l'interface est fourni(e) dans le REE (120) ou dans le TEE (140), dans lequel l'au moins une CA (113) initie la pluralité de demandes d'accès au service ou à l'interface pour demander un service ou une ressource,
• construire, par le collecteur de données de comportement d'accès (134), un ensemble de données de comportement d'accès (138) sur la base de la pluralité de journaux de comportement d'accès, l'ensemble de données de comportement d'accès comprenant la pluralité de journaux de comportement d'accès,
• former un modèle de comportement d'accès sur la base de l'ensemble de données de comportement d'accès (138) en tant que source de données de la formation et sur la base d'une méthode statistique ou d'un algorithme d'apprentissage automatique, dans lequel le modèle de comportement d'accès représente une caractéristique comportementale d'accès au service ou à l'interface par l'au moins une CA (113),
• déterminer une valeur de chaque paramètre de contrôle parmi au moins un paramètre de contrôle sur la base du modèle de comportement d'accès formé, dans lequel une politique de contrôle comprend un seuil de l'au moins un paramètre de contrôle,
• déterminer le seuil de l'au moins un paramètre de contrôle à l'aide d'une formule utilisée pour analyser une capacité de défense contre des attaques DoS dans une contrainte selon laquelle une quantité minimale de ressources nécessaires pour mener à bien une attaque DoS dépasse un indicateur rigide, la formule pour analyser la capacité de défense contre des attaques DoS représente une relation de contrainte entre la quantité minimale de ressources nécessaires pour mener à bien l'attaque DoS et les valeurs de l'au moins un paramètre de contrôle, et l'indicateur rigide est corrélé à une restriction des ressources matérielles, à une restriction du système d'exploitation ou à une restriction du scénario de service du dispositif terminal,

∘ dans lequel la quantité minimale de ressources nécessaires pour mener à bien l'attaque DoS est une quantité d'applications qui doivent fonctionner simultanément sur le dispositif terminal, et l'indicateur rigide est une quantité maximale d'applications qui sont autorisées à fonctionner simultanément sur le dispositif terminal,

• convertir le seuil déterminé de l'au moins un paramètre de contrôle en la politique de contrôle, déterminant ainsi la politique de contrôle,
• après avoir déterminé la politique de contrôle, recevoir une demande d'accès initiée par une CA (113) parmi l'au moins une CA au service ou à l'interface,
• si une authentification d'identité de la CA (113) réussit, transférer la demande d'accès au collecteur de données de comportement d'accès (134) déployé dans le TEE,
• enregistrer, par le collecteur de données de comportement d'accès (134), un journal de comportement d'accès correspondant à la demande d'accès,
• transmettre, par le collecteur de données de comportement d'accès (134), la demande d'accès à un module de défense (170) déployé dans le TEE (140) ; et
• déterminer, par le module de défense (170), en fonction de la politique de contrôle, s'il convient d'accorder la demande d'accès.

2. Procédé selon la revendication 1, dans lequel la détermination, par le module de défense (170) en fonction de la politique de contrôle, s'il convient d'accorder la demande d'accès comprend :

• si la demande d'accès déclenche le dépassement du seuil pour l'au moins un paramètre de contrôle, le blocage de la demande d'accès, ou si la demande d'accès ne déclenche pas le dépassement du seuil pour l'au moins un paramètre de contrôle, l'accord de la demande d'accès.

3. Procédé selon la revendication 2, comprenant en outre :

• après avoir bloqué la demande d'accès, le commandement à un utilisateur de déterminer s'il convient d'accorder la demande d'accès ; et
• si l'utilisateur accorde la demande d'accès, la mise à jour du modèle de comportement d'accès sur la base du journal de comportement d'accès correspondant à la demande d'accès, afin d'obtenir un modèle de comportement d'accès mis à jour.

4. Procédé selon la revendication 3, comprenant en outre :

• la mise à jour de la politique de contrôle sur la base du modèle de comportement d'accès mis à jour.

5. Procédé selon l'une quelconque des revendications précédentes, dans lequel la pluralité de journaux de comportement d'accès correspondant à la pluralité de demandes d'accès comprend : des informations sur une entité qui initie chacune de la pluralité de demandes d'accès, des horodatages de chacune de la pluralité de demandes d'accès, et des quantités de ressources utilisées pour chacune de la pluralité de demandes d'accès ; et la nature de l'au moins un paramètre de contrôle comprend au moins l'un des éléments suivants : un intervalle de temps entre deux accès consécutifs par une CA au service ou à l'interface, une quantité de ressources associées du service ou de l'interface détenues par une CA, et un temps pendant lequel une CA détient les ressources associées du service ou de l'interface.

6. Procédé selon la revendication 1, dans lequel une application de confiance, TA (115), s'exécute dans le TEE (140), la demande d'accès est utilisée pour demander d'ouvrir, dans la TA (115), une session avec la CA (113), et la nature de l'au moins un paramètre de contrôle comprend au moins l'un des éléments suivants : l'intervalle de temps entre deux accès consécutifs par une CA (113) au service ou à l'interface, une quantité de sessions tenues par une CA entre la CA et la TA, et un temps des sessions tenues par une CA entre la CA et la TA.

7. Procédé selon la revendication 6, dans lequel le seuil de l'au moins un paramètre de contrôle comprend un seuil de l'intervalle de temps entre deux accès consécutifs par une CA au service ou à l'interface ; et la détermination, par le module de défense (170) selon la politique de contrôle, s'il convient d'accorder la demande d'accès comprend :

• le calcul d'un intervalle de temps entre la demande d'accès initiée par la CA et une demande d'accès initiée par la CA au service ou à l'interface une fois précédente ; et

• lorsque l'intervalle de temps calculé est inférieur au seuil de l'intervalle de temps, le blocage, par le module de défense (170), de la demande d'accès ; ou

• lorsque l'intervalle de temps calculé est supérieur au seuil de l'intervalle de temps, l'accord, par le module de défense (170), de la demande d'accès.

8. Procédé selon la revendication 6, dans lequel le seuil de l'au moins un paramètre de contrôle comprend une limite supérieure de la quantité de sessions tenues par une CA entre la CA et la TA ; et la détermination, par le module de défense (170) selon la politique de contrôle, s'il convient d'accorder la demande d'accès comprend :

• la détermination, sur la base d'un état de demande actuel de la CA, de la quantité de sessions déjà tenues par la CA entre la CA et la TA ; et

• lorsque la quantité de sessions déterminée est supérieure ou égale à la limite supérieure, le blocage, par le module de défense (170), de la demande d'accès ; ou

• lorsque la quantité de sessions déterminée est inférieure à la limite supérieure, l'accord, par le module de défense (170), de la demande d'accès.

9. Dispositif terminal comprenant un processeur, une mémoire, et un programme informatique qui est stocké dans la mémoire et peut être exécuté par le processeur, lorsque le processeur exécute le programme, le dispositif terminal étant amené à exécuter l'un quelconque des procédés selon les revendications 1 à 8.

10. Support de stockage lisible par ordinateur stockant un programme informatique, dans lequel lorsque le programme est exécuté par un processeur sur un dispositif terminal, le dispositif terminal est amené à exécuter l'un quelconque des procédés selon les revendications 1 à 8.

FIG. 1

Terminal device 100

120

Rich execution environment (REE)

113
Client application (CA)

113
Client application (CA)

127
TEE functional interface

126
TEE client interface

123
Rich OS
Common peripheral driver
REE communications agent 129

140

Trusted execution environment (TEE)

115
Trusted application (TA)

115
Trusted application (TA)

115
Trusted application (TA)

145
TEE internal interface

143
Trusted operating system

TEE kernel 149

TEE communications agent
Trusted peripheral driver 147

Common peripheral 121

Message routing

Trusted peripheral 141

Hardware platform 110

FIG. 2

REE 120

TEE 140

| CA 113 | CA 113 | CA 113 |

| TA 115 | TA 115 | TA 115 |

To-be-protected service/interface 10

Critical resource application interface 132

Access behavior dataset 138

Critical resource access agent 130

Access behavior data collector 134

Raw data/ Processed data

**Phaseofcollecting access behavior data of a client application (CA)**

Behavior model corrector 151 (Optional)

Behavior modeler 150

**Phaseof modeling behavior of a client application (CA)**

Defense module 170

DoS attack analyzer 160

**Phaseofcontrolling access behavior of a client application (CA)**

FIG. 3

EP 3 694 170 B1

FIG. 4

Rich execution
environment (REE)

Client
application
(CA)

Trusted execution
environment (TEE)

Trusted
application
(TA)

InitializeContext

OpenSession

Return Session Handle

InvokeCommand

Return result

CloseSession

Command
Handler

FinalizeContext

FIG. 5

**Execution environment of a terminal device**

**Offline process**

REE 120

| Fingerprint CA | Digital certificate CA | Security keyboard CA |

OpenSession interface

TEE Client API

Critical resource access agent 130 (Tzdriver)

Kernel

TEE 140

| Fingerprint TA | Digital certificate TA | Security keyboard TA |

Global task module 142

Behavior model corrector 151 (Optional)

Defense module 170

Access behavior dataset 138

Behavior modeler 150

DoS attack analyzer 160

FIG. 6

EP 3 694 170 B1

Determine a service scenario in which a predefined normal CA invokes an OpenSession interface

Test an invocation of the OpenSession interface for each service scenario

Obtain behavior data by using a global task module, store the data into a log in a disk, and export the data in batches

Calculate a time interval J between two consecutive invocationsofthe OpenSession interfaceby a same CA

Calculate a time length L that the CA holds a session

Calculate a quantity m of sessions held by a same CA simultaneously during an access

FIG 7

Traverse an access behavior dataset

Identify through data analysisand filter out behavior data under an extreme condition

Assume data distribution models f1 and f2 of the time length L that the session is held and the access time interval J between two consecutive invocations of the OpenSession interfaceby thesame CA

Calculate a likelihood function expression of the data distribution models

Calculate distribution model parameters by using a maximum likelihood method

Solve a maximum value of m

FIG. 8

Traverse an access behavior model

Instantiate a formulaforanalyzing a capability ofdefending against DoS attacks Y = (a/b) * m based on a characteristic of the access behavior model

Determine an upper limit $\gamma$ of a quantity of applications in a terminal device

Solve values of a, b, and m on a premise that $Y \geq \gamma$, to maximize a probability that a normal CA can access a to-be-protected service/interface when meeting a control condition, and to minimize a probability of a DoS attack caused by a malicious client

Output constraint of a control parameter

FIG. 9

FIG. 10

400 ⌐

**Terminal device**

404
Communications interface

418
Transmitter circuit

416
Receiver circuit

406
Storage medium

420
Program

402
Processing circuit

FIG. 11

300

| Non-security domain 310 | Security domain 320 |
|---|---|

Non-security domain 310

CA  CA  CA

To-be-protected
service/interface 11

Kernel

Security domain 320

TA  TA  TA

Kernel

Hardware resource

FIG. 12

**EP 3 694 170 B1**

## REFERENCES CITED IN THE DESCRIPTION

### Patent documents cited in the description

- WO 2017167166 A1

- WO 2016049319 A1